# DEMANDE DE BREVET EUROPEEN

(11) **EP 3 851 259 A1**
(43) Date de publication de la demande: **21.07.2021**
(21) Numéro de dépôt: 20217873.7
(22) Date de dépôt: 30.12.2020
(51) Int. Cl.: B26D 3/10, B26F 1/38, B65B 69/00, B25J 11/00, B26D 1/10

(54) **INSTALLATION ET PROCEDE DE DECOUPE ET/OU DE PREDECOUPE DE BOÎTES PAR PERFORATION**

(30) Priorité: 15.01.2020 FR 2000356
(71) Demandeur: HOLDING FINANCIERE CIUCH En abrégé "H.F.C.", 59200 Tourcoing (FR)
(72) Inventeur: CIUCH, Francis, 59890 Quesnoy sur Deule (FR)
(74) Mandataire: Matkowska, Franck

(57) **Abrégé**

L'Installation de découpe automatisée et/ou de prédécoupe automatisée de boîtes, comporte un dispositif de découpe (3) et des moyens de calage (5) d'une boîte en position de découpe par rapport au dispositif de découpe (3). Le dispositif de découpe (3) comporte une tête de découpe par perforation (31) et un dispositif (30) de déplacement permettant un positionnement et un déplacement automatisés, en suivant un trajet de découpe, de ladite tête de découpe par perforation (31) par rapport à une boîte (2). La tête de découpe par perforation (31) comporte un outil de perforation, qui est actionnable par un moteur de manière à avoir un mouvement de translation va-et-vient répétitif. L'installation comporte une unité de commande (32), qui est apte à commander le dispositif de découpe (3), de manière à pouvoir réaliser automatiquement une découpe et/ou une prédécoupe par perforations successives d'au moins une paroi d'une boîte (2) calée en position de découpe, au moyen de l'outil de perforation actionné par ledit moteur et par déplacement automatique de la tête de découpe par perforation (31) transversalement à la direction du mouvement de va-et-vient de l'outil de perforation et en suivant ledit trajet de découpe.

## Description

### Domaine technique

La présente invention concerne le domaine de la découpe ou prédécoupe automatisée de boîtes. Elle s'applique notamment à des boîtes qui sont susceptibles de se déformer, telles que par exemple des boîtes en carton et/ou plus particulièrement des boîtes à fonction d'emballage qui contiennent des articles, la découpe ou prédécoupe réalisée dans la boîte à fonction d'emballage, permettant dans ce cas ultérieurement un accès facilité aux articles, par exemple lors d'opérations de déballage par prélèvement à la main des articles.

### Art antérieur

Dans le domaine de la découpe ou prédécoupe automatisée de boîtes, il est à ce jour connu d'utiliser une ou plusieurs lames de coupe acérées pour réaliser un chemin de découpe dans une ou plusieurs parois d'une boîte en carton utilisée notamment comme suremballage pour le transport et/ou le stockage d'articles.

Dans certaines solutions techniques connues, telle que celle décrite par exemple dans la demande de brevet européen EP 3 412 416, on utilise une tête de découpe équipée d'au moins une lame de coupe qui est fixe et comporte un bord de découpe effilé et tranchant. La découpe dans la paroi d'une boîte est obtenue en faisant passer cette lame de coupe effilée et tranchante à travers la paroi et en déplaçant en translation la tête de coupe par rapport à la paroi de la boîte. Cette solution technique est en outre adaptée pour réaliser des découpes continues et n'est pas adaptée pour réaliser des prédécoupes discontinues.

Dans d'autres solutions techniques connues, telle que celle décrite par exemple dans la demande de brevet européen EP 1 958 112, on utilise une ou plusieurs lames de coupe rotatives, qui comportent également un bord de découpe effilé et tranchant, et que l'on déplace automatiquement en translation par rapport à la boîte le long d'un trajet de découpe prédéfini et pouvant le cas échéant être paramétrable, de manière à réaliser une ou plusieurs lignes de découpe continues ou une ou plusieurs lignes de prédécoupe discontinues dans une ou plusieurs parois de la boîte.

Lorsque la boîte sert d'emballage et contient des articles, ces lignes de découpe continues ou ces lignes de prédécoupe discontinues permettent de ménager dans la boîte une ouverture facilitant l'accès aux articles, notamment lors d'opérations ultérieures de déballage par prélèvement à la main des articles, qui sont plus communément appelées « picking » et qui sont généralement réalisées sur un point de vente ou de distribution des articles.

Les solutions techniques susvisées de découpe ou prédécoupe de boîtes au moyen de lames de coupe effilées et tranchantes présentent plusieurs inconvénients, en particulier lorsque les boîtes servent d'emballage et contiennent des articles pouvant être détériorés par la lame de coupe effilée et tranchante et/ou lorsque les boîtes sont dans un matériau facilement déformable, tel que du carton.

Lorsque la boîte contient des articles pouvant être détériorés au contact d'une lame de coupe effilée et tranchante, il est primordial dans les solutions de découpe ou de prédécoupe susvisées que le positionnement de la lame de coupe par rapport à la paroi de la boîte soit extrêmement précis, afin que la lame traverse toute l'épaisseur de la paroi de la boîte tout en évitant que le bord de découpe effilé et tranchant de la lame ne vienne au contact des articles contenus dans la boîte.

Pour diminuer les risques de contact entre la lame de découpe effilée et tranchante et les articles contenus dans la boîte, il est possible de charger la boîte avec un nombre moins important d'articles, mais ceci se fait au détriment du nombre d'articles conditionnés par boîte.

Il est également possible, tel que cela est décrit dans la demande de brevet EP 2 894 017, de faire basculer la boîte contenant les articles, de manière à décoller les articles de la paroi de boîte à découper, ce qui d'une part oblige de manière contraignante à mettre en oeuvre une opération supplémentaire de basculement de la boîte et ce qui d'autre part ne peut être efficace qu'à la condition ne pas remplir la boîte avec un nombre trop important d'articles.

Par ailleurs, lorsque les boîtes à découper sont dans un matériau facilement déformable, tel que par exemple du carton, il arrive fréquemment que la paroi dans laquelle on doit pratiquer la découpe au moyen de la lame effilée et tranchante ne soit pas parfaitement plane, mais soit plus ou moins bombée, le plus souvent vers l'extérieur.

Cette déformation irrégulière et non contrôlée d'une boîte peut avoir plusieurs causes, qui peuvent éventuellement se cumuler.

Par exemple, lorsque l'on souhaite maximiser le nombre d'articles conditionnés dans la boîte, on remplit cette boîte en la bourrant avec un nombre très important d'articles, qui de ce fait exercent sur les parois déformables de la boîte une pression mécanique pouvant être suffisante pour déformer les parois de la boîte.

Par ailleurs, il arrive fréquemment que les boîtes contenant des articles soient transportées et/ou stockées dans des environnements humides, dont le taux d'humidité plus ou moins élevé contribue à ramollir le matériau constitutif de la boîte, ce qui augmente les risques de déformation des boîtes. Des environnements à fort taux d'humidité sont par exemple rencontrés lorsque les boîtes sont transportées par voie maritime dans des conteneurs et/ou sont entreposées dans des entrepôts ouverts dont l'air n'est pas conditionné.

Les problèmes susvisés de déformations des boîtes sont également amplifiés lorsque les boîtes contenant des articles sont transportées et/ou entreposées en étant empilées les unes sur les autres.

Les solutions techniques susvisées de découpe ou prédécoupe au moyen d'une lame effilée et tranchante, fixe ou rotative, engendrent ainsi un risque important de détérioration d'articles contenus dans une boîte et sont adaptées pour découper ou le cas échéant prédécouper des boîtes, dont les parois sont parfaitement planes, mais sont en pratique mal adaptées pour la découpe ou prédécoupe de boîtes pouvant être déformées de manière irrégulière et non contrôlée et/ou de boîtes remplies avec un nombre important d'articles.

### Objectif de l'invention

Un objectif de l'invention est de proposer une nouvelle solution technique de découpe automatisée et/ou de prédécoupe automatisée de boîtes, et notamment de boîtes contenant des articles et/ou des boîtes déformables de type boîtes en carton, qui permet de pallier les inconvénients précités des solutions techniques susvisées utilisant une ou plusieurs lames de coupe effilées et tranchantes.

### Résumé de l'invention

L'invention a ainsi pour premier objet une installation de découpe automatisée et/ou de prédécoupe automatisée de boîtes, ladite installation comportant un dispositif de découpe et des moyens de calage d'une boîte en position de découpe par rapport au dispositif de découpe ; le dispositif de découpe comporte une tête de découpe par perforation et un dispositif de déplacement permettant un positionnement et un déplacement automatisés, en suivant un trajet de découpe, de ladite tête de découpe par perforation par rapport à une boîte, qui est calée en position de découpe par rapport au dispositif de découpe ; ladite tête de découpe par perforation comporte un outil de perforation, qui est actionnable par un moteur de manière à avoir un mouvement de translation va-et-vient répétitif ; ladite installation comporte une unité de commande, qui est apte à commander le dispositif de découpe, de manière à pouvoir réaliser automatiquement une découpe et/ou une prédécoupe par perforations successives d'au moins une paroi d'une boîte calée en position de découpe, au moyen de l'outil de perforation actionné par ledit moteur et par déplacement automatique de la tête de découpe par perforation transversalement à la direction du mouvement de va-et-vient de l'outil de perforation et en suivant ledit trajet de découpe.

De manière facultative, l'installation peut également comporter la ou les caractéristiques techniques optionnelles ci-après, prises isolément ou en combinaison l'une avec l'autre :
- l'unité de commande est apte au cours d'une opération de découpe et/ou prédécoupe à commander le déplacement de la tête de découpe par perforation dans un plan qui est transversal, et de préférence perpendiculaire à la direction du mouvement de va-et-vient de l'outil de perforation et en suivant ledit trajet de découpe dans ce plan.
- l'unité de commande est apte à commander les moyens de calage, de manière à permettre un calage automatique d'une boîte en position de découpe par rapport au dispositif de coupe.
- la tête de découpe par perforation comporte une face d'appui, qui est destinée pendant une opération de découpe ou prédécoupe d'une boîte à être positionnée contre une paroi de ladite boîte, et dans laquelle l'outil de perforation est actionnable par ledit moteur de manière à avoir un mouvement de translation va-et-vient répétitif entre une position extrême de découpe dans laquelle au moins une partie de l'outil de perforation est en saillie par rapport à la face d'appui et une position escamotée dans laquelle l'outil de perforation ne dépasse pas de la face d'appui.
- l'outil de perforation traverse la face d'appui au cours de son mouvement va-et-vient.
- la tête de découpe par perforation comporte une partie, qui est fixée au dispositif de déplacement automatique, une partie mobile qui comporte ladite face d'appui et qui est mobile et guidée en translation par rapport à ladite partie fixe dans une direction transversale à la face d'appui, et un moyen de compression élastique, et de préférence au moins un ressort de compression, qui est interposé entre la partie fixe et la partie mobile, qui est apte à être compressé lorsque la partie mobile est déplacée en translation en direction de la partie fixe, et qui à l'état compressé exerce sur la partie mobile une force de poussée permettant de repousser en translation la partie mobile par rapport à la partie fixe.
- l'installation comporte une semelle dont l'une des faces forme ladite face d'appui.
- la semelle est apte à pivoter autour d'un axe de rotation de manière à permettre une modification de l'inclinaison de la face d'appui.
- le dispositif de déplacement automatique permet de déplacer au moins en translation ladite tête de découpe par perforation dans les directions d'au moins deux axes orthogonaux, et de préférence dans les directions de trois axes orthogonaux.
- le dispositif de déplacement automatique permet une rotation de ladite tête de découpe par perforation autour de chaque axe de translation de ladite tête de découpe par perforation.
- le dispositif de déplacement automatique comporte un bras robotisé six axes, à l'extrémité duquel est fixée la tête de découpe par perforation.
- l'outil de perforation est profilé de manière à perforer la paroi d'une boîte, sans enlèvement de matière, à chaque mouvement de va-et-vient de l'outil de perforation.
- l'outil de perforation présente un bord de découpe qui est arrondi et dépourvu d'arête vive tranchante, et qui s'étend en longueur transversalement, et de préférence perpendiculairement, à la direction du mouvement va-et-vient de l'outil de perforation.
- l'outil de perforation est profilé de manière à réaliser une fente dans la paroi d'une boîte à chaque mouvement de va-et-vient de l'outil de perforation.
- l'installation comporte des moyens de mesure, de préférence sans contact, qui permettent de déterminer automatiquement la dimension d'une boîte introduite dans l'installation, le long d'au moins un axe, plus particulièrement les dimensions d'une boîte le long d'au moins deux axes orthogonaux, et de préférence les dimensions d'une boîte, le long d'au moins trois axe orthogonaux, et l'unité de commande est apte à commander automatiquement le dispositif de déplacement automatique de la tête de découpe en fonction de chaque dimension mesurée.
- l'installation comporte au moins un convoyeur permettant de déplacer successivement chaque boîte au moins par rapport aux moyens de mesure.
- les moyens de mesure permettent de déterminer automatiquement la ou les dimensions de la boîte, quelle que soit l'orientation de la boîte sur le convoyeur et/ou de déterminer automatiquement la ou les dimensions de la boîte pendant que la boîte est en mouvement par rapport aux moyens de mesure.
- l'unité de commande est apte à commander en temps masqué les moyens de mesure et le dispositif de découpe, de telle sorte qu'une opération de découpe par perforation d'une boîte en suivant un trajet de découpe est réalisée automatiquement pendant que les moyens de mesure réalisent l'acquisition de la ou des dimensions de la boîte suivante à découper.
- les moyens de calage d'une boîte en position de découpe comportent un convoyeur de calage, qui et apte à transporter une boîte jusqu'à sa position de découpe, une butée avant qui est mobile et qui est actionnable entre une position haute dans laquelle elle permet de bloquer, dans sa position de découpe et dans la direction de transport dudit convoyeur de calage, une boîte transportée sur ledit convoyeur de calage, et une position basse dans laquelle elle est escamotée et ne fait pas au obstacle au passage d'une boîte transportée sur ledit convoyeur de calage, et deux butées latérales qui sont en vis-à-vis l'une de l'autre, et dont au moins une est mobile transversalement à la direction de transport dudit convoyeur entre une position de calage dans laquelle elle immobilise une boîte en position de découpe transversalement à la direction de transport du convoyeur de calage par serrage de la boîte entre les deux butées latérales et une position écartée dans laquelle elle est suffisamment écartée de l'autre butée latérale pour ne pas faire obstacle au passage d'une boîte transportée sur le convoyeur de calage.
- l'unité de commande est apte à piloter automatiquement le déplacement de la tête de découpe par perforation rapport à la boîte, de manière à réaliser une ligne de prédécoupe discontinue dans au moins une paroi de la boîte, sur au moins une partie du trajet de découpe, et de préférence le long de tout le trajet de découpe.
- l'unité de commande est apte à piloter automatiquement le déplacement de la tête de découpe par perforation par rapport à la boîte, de manière à réaliser une ligne de découpe continue dans au moins une paroi de la boîte, sur au moins une partie du trajet de découpe, et de préférence le long de tout le trajet de découpe.

L'invention a pour autre objet une utilisation de l'installation susvisée ou d'une tête de découpe par perforation comportant un outil de perforation, qui est actionnable par un moteur de manière à avoir un mouvement de translation va-et-vient répétitif, pour réaliser automatiquement une découpe et/ou une prédécoupe par perforations successives dans au moins une paroi d'une boîte en suivant un trajet de découpe, et plus particulièrement dans au moins une paroi d'une boîte contenant des articles et/ou d'une boîte déformable de type boîte en carton, et de préférence d'une boîte en carton contenant des articles.

Plus particulièrement, l'installation susvisée peut être utilisée pour réaliser automatiquement une découpe continue et/ou une prédécoupe discontinue par perforations successives dans au moins deux parois sensiblement perpendiculaires d'une boîte.

L'invention a pour autre objet un procédé de découpe automatisée et/ou de prédécoupe automatisée d'une boîte, et notamment une boîte contenant des articles et/ou d'une boîte en carton, et de préférence d'une boîte en carton contenant des articles, dans lequel on cale en position de découpe ladite boîte par rapport à un dispositif de découpe comportant une tête de découpe par perforation, ladite tête de découpe par perforation comportant un outil de perforation, qui est actionnable par un moteur de manière à avoir un mouvement de translation va-et-vient répétitif, dans lequel on commande le moteur de la tête de découpe par perforation et on positionne automatiquement la tête de découpe par perforation par rapport à la boîte, de manière à entraîner l'outil de perforation en translation avec un mouvement de va-et-vient répétitif à travers une paroi de la boîte, et dans lequel on déplace automatiquement ladite tête de découpe, par rapport à la boîte, en suivant un trajet de découpe, de manière à réaliser une découpe et/ou une prédécoupe par perforations successives de la paroi de la boîte au moyen de l'outil de perforation.

De manière facultative, le procédé peut également comporter la ou les caractéristiques techniques optionnelles ci-après, prises isolément ou en combinaison l'une avec l'autre :
- la tête de découpe comporte une face d'appui et l'outil de perforation est actionnable par ledit moteur de manière à avoir un mouvement de translation va-et-vient répétitif, qui est orienté transversalement à la face d'appui, et entre une position sortie dans laquelle au moins une partie de l'outil de perforation est en saillie par rapport à la face d'appui et une position escamotée dans laquelle l'outil de perforation ne dépasse pas de la face d'appui ; on positionne automatiquement la face d'appui contre la paroi de la boîte et on déplace automatiquement ladite tête de découpe par perforation par rapport à la boîte, en suivant le trajet de découpe, et en maintenant la face d'appui contre la paroi de la boîte, de préférence en exerçant au moyen de la face d'appui une pression mécanique sur la paroi de la boîte.
- on réalise, avant ou pendant l'opération de découpe et/ou prédécoupe de la boîte au moyen de l'outil de perforation, une mesure automatique d'une ou plusieurs dimensions de la boîte, de préférence en utilisant des moyens de mesure sans contact.
- on réalise automatiquement l'opération de découpe par perforation d'une boîte en suivant un trajet de découpe pendant que l'on mesure la ou les dimensions de la boîte suivante à découper.

### Brève description des dessins

Les caractéristiques et avantages de l'invention apparaîtront plus clairement à la lecture de la description détaillée ci-après de plusieurs variantes de réalisation de l'invention, laquelle description est donnée à titre d'exemple non limitatif et non exhaustif de l'invention, et en référence aux dessins annexés sur lesquels :
- les figures 1 et 2 sont des vues d'ensemble d'un exemple particulier d'installation conforme à l'invention ;
- la figure 3A est une vue de dessus de l'installation de la figure 1 ou 2, la butée latérale mobile pour le calage de la boîte étant en position « inactive »;
- la figure 3B est une vue de dessus de l'installation de la figure 1 ou 2, la butée latérale mobile pour le calage de la boîte étant en position « active » de serrage latéral de la boite;
- la figure 4 est une représentation isométrique d'une première variante de réalisation d'une tête de découpe par perforation, qui est conforme à l'invention, et qui est fixée à l'extrémité d'un bras robotisé, l'outil de perforation étant en position escamotée et n'étant pas visible;
- la figure 5 est une représentation isométrique de la tête de découpe par perforation de la figure 4 avec l'outil de perforation en position sortie ;
- la figure 6 est une représentation isométrique d'une variante de réalisation particulière d'un outil de perforation monté sur un porte-outil ;
- la figure 7 est une vue de côté de l'outil de perforation et du porte-outil de la figure 6 ;
- la figure 8 est une vue de côté d'une boîte et de la tête de découpe par perforation de la figure 4 positionnée en appui contre l'une des parois de la boîte ;
- la figure 9 est une vue de côté d'une boîte et de la tête de découpe par perforation de la figure 4 positionnée en appui contre l'une des parois de la boîte, à une autre position que celle de la figure 9;
- la figure 10 est une représentation isométrique d'une deuxième variante de réalisation d'une tête de découpe par perforation, qui est conforme à l'invention et qui comporte une semelle d'appui pivotante, l'outil de perforation étant en position escamotée et n'étant pas visible, et la semelle d'appui étant horizontale ;
- la figure 11 est une représentation isométrique de la tête de découpe par perforation de la figure 10 avec l'outil de perforation en position sortie ;
- la figure 12 est une représentation isométrique de la tête de découpe par perforation de la figure 10, avec la semelle d'appui pivotante en position inclinée ;
- la figure 13 est un organigramme illustrant un exemple de mise en œuvre automatisée des principales étapes de fonctionnement de l'installation des figures 1 à 3 ;
- la figure 14 illustre plusieurs exemples de boîtes comportant des lignes de coupe ou de prédécoupe pouvant être réalisées avec l'installation des figures 1, 2, 3A, 3B.

### Description détaillée

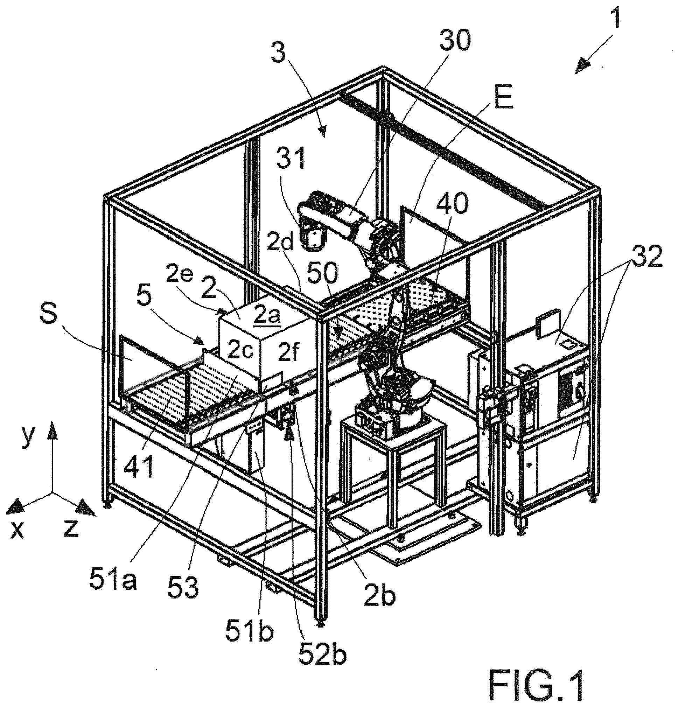

On a représenté sur les figures 1, 2, 3A, 3B, un exemple particulier de réalisation d'une installation 1 permettant la découpe automatisée et/ou prédécoupe automatisée de boîtes 2, et notamment de boîtes en carton ou similaire, contenant de préférence des articles.

Dans l'exemple particulier illustré sur les figures annexées, chaque boîte 2 forme un parallélépipède rectangle et comporte une paroi supérieure 2a, une paroi de fond 2b, une paroi avant 2c, une paroi arrière 2d, et deux latérales 2e et 2f.

L'invention n'est toutefois pas limitée à des boîtes 2 en forme de parallélépipède rectangle, et peut d'une manière plus générale être mise en œuvre avec tout autre type connu de géométrie de boîtes, et par exemple avec des boîtes cylindriques ou autre.

Cette installation 1 comporte un dispositif de découpe 3 comportant un bras robotisé 30, à l'extrémité duquel est fixée une tête de découpe par perforation 31, des moyens de calage 5 d'une boîte 2 en position de découpe par rapport au dispositif de découpe 3 et une unité de commande 32, qui permet de commander automatiquement au moins le bras robotisé 30 et la tête de découpe par perforation 31.

De préférence, l'unité de commande 32 permet également de commander les moyens de calage 5 de manière à caler automatiquement une boîte 2 en position de découpe par rapport au dispositif de découpe 3.

Cette unité de commande 32 peut être implémentée de manière usuelle au moyen d'une ou plusieurs unités de traitement programmables, et par exemple au moyen de microordinateur(s) et/ou d'automate(s) programmable(s) et/ou de carte(s) électronique(s) avec microprocesseur(s) ou microcontrôleur(s)..., qui sont connectés aux différents éléments de l'installation à piloter, au moyen d'interfaces de commande électroniques adaptées.

### Tête de découpe par perforation 3

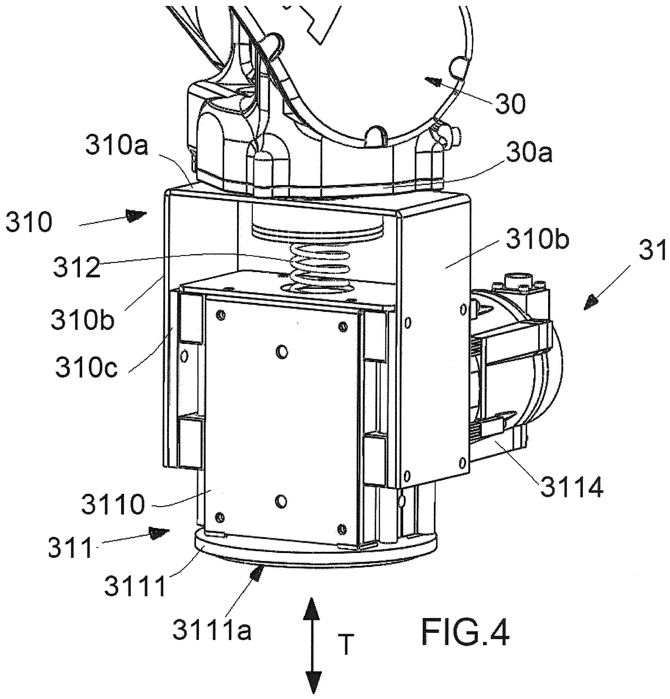

En référence à la variante particulière de réalisation de la figure 4, la tête de découpe par perforation 31 comporte une première partie 310, qui est fixée à l'extrémité 30a du bras robotisé 30, et une deuxième partie 311 mobile, qui est assemblée avec la première partie fixe 310, de manière à pouvoir coulisser en translation dans les deux sens (double flèche T) par rapport à la partie fixe 310, et qui est également reliée à la partie fixe 310 par un ressort de compression 312, par exemple de type hélicoïdal, dont l'axe de compression est parallèle à la direction de translation (T) de la partie mobile 311.

Le ressort de compression 312 peut être remplacé par tout moyen équivalent de compression élastique remplissant la même fonction.

Plus particulièrement, dans cet exemple illustré, la première partie fixe 310 comporte un support en forme U qui comporte une paroi de base 310a fixée à l'extrémité 30a du bras robotisé 30 et deux parois latérales 310b en vis-à-vis l'une de l'autre. La première partie fixe 310 comporte également des glissières de guidage 310c, qui sont fixées sur les faces internes des deux parois latérales 310b, et qui permettent le guidage en translation de la deuxième partie mobile 311.

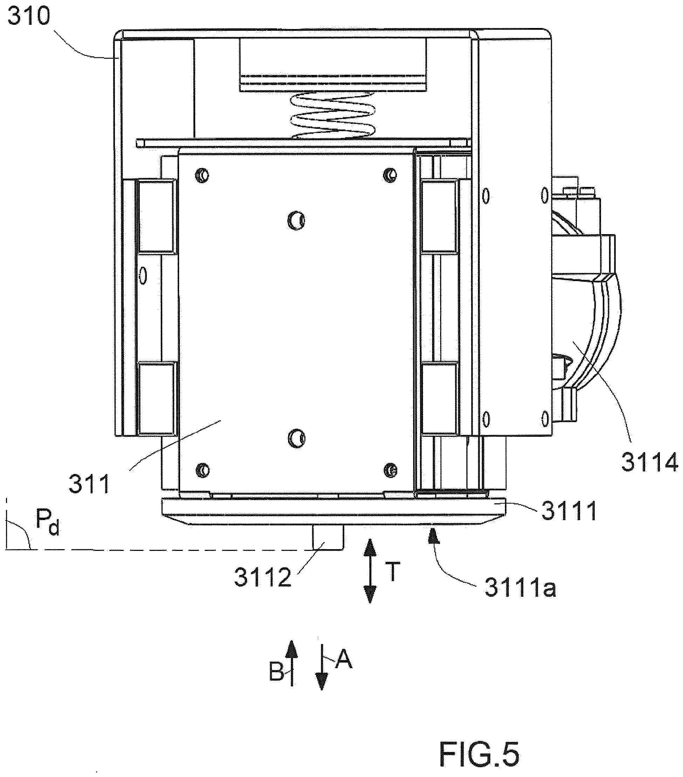

Dans cette variante particulière de réalisation, la deuxième partie mobile 311 comporte un carter 3110 et une semelle 3111, qui est fixée au carter 3110 et qui comporte une face d'appui 3111a plane et orientée transversalement à la direction de translation T (figure 5) de la deuxième partie mobile 311 par rapport à la partie fixe 310 de la tête de découpe 31. Au cours d'une opération de découpe par perforation, cette semelle 3111a est destinée à être posée, par le bras robotisé 30, en appui contre la paroi de la boîte 2 à découper.

La figure 4 représente la tête de découpe 31 au repos, lorsque la semelle 3111 n'est pas posée en appui contre une surface, telle que la paroi d'une boîte 2 à découper. Dans cette configuration, la deuxième partie mobile 3111 est retenue en butée par la glissière de guidage 310c, aucune force de pression n'étant exercée sur la semelle 3111.

En référence à la figure 5, la deuxième partie mobile 311 comporte également un outil de perforation mobile 3112 qui, dans sa position extrême de découpe de la figure 5, passe à travers la semelle 3111 et est en partie en saillie par rapport à la face d'appui 3111a de la semelle 3111 et qui, dans sa position escamotée de la figure 4 est rentré à l'intérieur du carter 3110 et ne dépasse pas de la face d'appui 3111a de la semelle 3111.

Cet outil de perforation 3112 est actionnable par un moteur électrique 3114 qui est fixé au carter 3110 de la partie mobile 311. Le rotor de ce moteur électrique 3114 est couplé mécaniquement à l'outil de perforation 3112 par une transmission mécanique, qui est logée dans le carter 3110, et qui permet de transformer la rotation dans un sens du rotor du moteur 3114 en un mouvement de translation va-et-vient répétitif transmis à l'outil de perforation 3112 et définissant avec l'outil de perforation 3112 un plan de découpe Pd. Dans le cas particulier de la tête de découpe 31, ce plan de découpe Pd est orienté perpendiculairement à la face d'appui 3111a de la semelle 3111 (figure 5). La direction de translation T de la partie mobile 311, et de ce fait l'axe de compression du ressort 312, sont parallèles à ce mouvement de translation va-et-vient (A, B) de l'outil de perforation.

Ainsi, lorsque le moteur 3114 est alimenté électriquement et que son rotor tourne dans un sens de rotation, l'outil de perforation 3112 exécute un mouvement de translation va-et-vient répétitif dans le plan de découpe Pd, en passant à travers cette semelle 3111, entre sa position escamotée de la figure 4 et sa position extrême de découpe de la figure 5.

La cadence de ce mouvement va-et-vient répétitif de l'outil de perforation 3112 peut être facilement ajustée en réglant la vitesse de rotation du rotor du moteur 3114.

### Bras robotisé 30

De préférence, mais non nécessairement le bras robotisé 30 est un bras robotisé 6 axes, ayant six degrés de liberté, à savoir trois degrés de liberté en translation selon trois axes orthogonaux X, Y et Z (figure 1), et trois degrés de liberté en rotation autour respectivement des trois axes X, Y, Z.

Ce bras robotisé 30 à six degrés de libertés permet ainsi avantageusement de positionner et d'orienter la tête de découpe 31 par rapport à chacune des parois 2a, 2c, 2d, 2e, 2f (à l'exception de la paroi de fond 2b) de manière à pouvoir réaliser au moyen de l'outil de perforation 3112 une ligne de découpe continue ou de prédécoupe discontinue le long d'un trajet de découpe prédéfini et dans au moins une paroi sélectionnée parmi ces parois 2a, 2c, 2d, 2e, 2f.

Dans une autre variante de réalisation, le bras robotisé 30 peut être remplacé par un dispositif de déplacement automatique de ladite tête de découpe 31 ayant un nombre de degrés de liberté plus faible et par exemple, et de manière non limitative et non exhaustive, par un dispositif de déplacement automatique de ladite tête de découpe 31 ayant cinq degrés de liberté (trois degrés de liberté en translation selon les trois axes orthogonaux X, Y et Z, et deux degrés de liberté en rotation autour respectivement des deux axes orthogonaux X, Z ou X,Y ou Y,Z).

Dans d'autres variantes de réalisation, lorsque l'on souhaite avoir la possibilité réaliser des découpes ou de prédécoupes dans un nombre plus restreint de parois d'une boîte 2, le bras robotisé 30 peut également être remplacé par un dispositif de déplacement automatique de ladite tête de découpe 31 ayant un nombre de degrés de liberté plus faible et par exemple, et de manière non limitative et non exhaustive, par un dispositif de déplacement automatique de ladite tête de découpe 31 ayant :
- quatre degrés de liberté (trois degrés de liberté en translation selon les trois axes orthogonaux X, Y et Z, et un degré de liberté en rotation autour de l'axe X ou de l'axe Z),
   ou
- trois degrés de liberté en translation selon les trois axes orthogonaux X, Y, Z,
   ou
- deux degrés de liberté en translation selon les deux axes orthogonaux X, Y ou X, Z ou Y, Z,
- ou voir même dans une version la plus simple un seul degré de liberté en translation selon l'axe X ou Z.

### Réalisation d'une ligne de découpe continue ou de prédécoupe discontinue dans une paroi d'une boîte

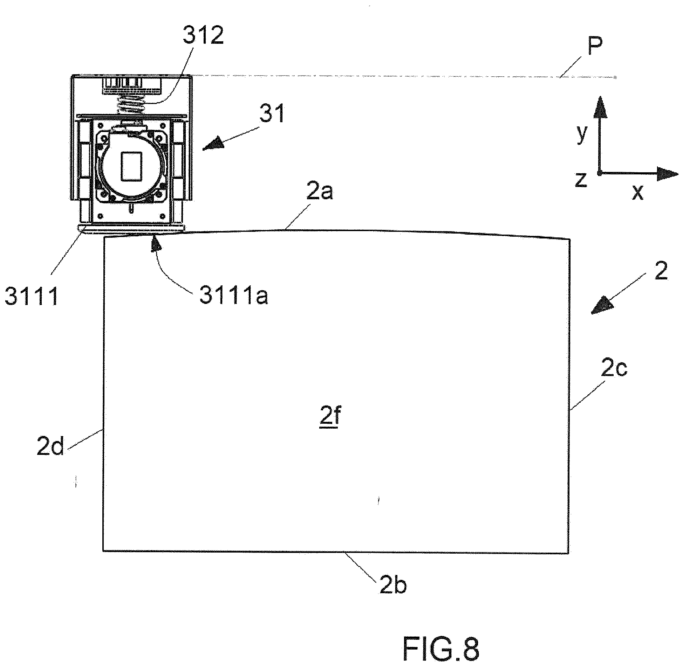

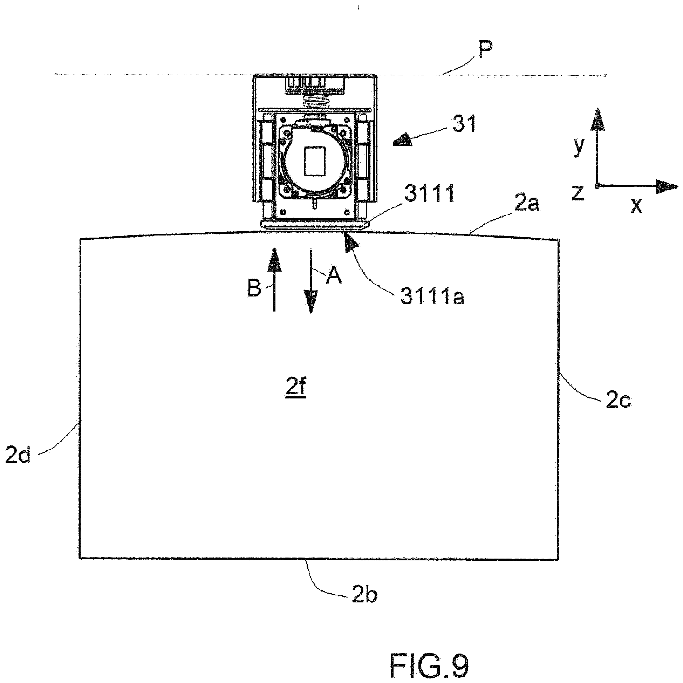

Pour réaliser une ligne de découpe continue ou un ligne de prédécoupe discontinue dans l'une des parois 2a, 2c, 2d, 2e, 2f d'une boîte 2 (à l'exception de la paroi de fond 2b), l'unité de commande 32 pilote automatiquement le bras robotisé 30, de telle sorte que celui-ci oriente la tête de découpe 31 et positionne la tête de découpe 31 dans un plan de référence P (figures 8 et 9). Le plan de découpe Pd de l'outil de perforation est orienté sensiblement perpendiculairement à la paroi de la boîte 2 à découper, la boîte 2 ayant a été préalablement calée en position par rapport au dispositif découpe 3. La face d'appui 3111a de la semelle 3111 de la tête de découpe 31 est en appui contre la paroi de la boîte 2 à découper (figures 8), la pression exercée par ladite paroi repoussant en translation la deuxième partie mobile 311 vers la partie fixe 310 en comprimant le ressort 312.

Les figures 8 et 9 illustrent une opération de découpe ou prédécoupe de la paroi supérieure 2a de la boîte 2, étant rappelé que le bras robotisé 30 permet d'orienter, de positionner et de déplacer la tête de découpe 31 par rapport à l'une quelconque des parois 2c, 2d, 2e, 2f d'une boîte 2, qui a été sélectionnée, de manière à réaliser une découpe ou prédécoupe de ladite paroi.

L'unité de commande 32 commande la rotation du moteur 3114 de manière à conférer à l'outil de perforation 3112 son mouvement de va-et-vient répétitif, et une fois la tête de découpe 31 correctement orientée et positionnée en appui contre la paroi la boîte 2, l'unité de commande 32 commande le bras robotisé 30 de manière à déplacer la tête de découpe 31 (figures 8 et 9) dans un plan P qui est transversal, et de préférence perpendiculaire à la direction du mouvement va-et-vient (A,B) de l'outil de perforation 3112, en suivant dans ce plan un trajet de découpe prédéfini.

Dans le cas d'une découpe ou prédécoupe des parois 2c ou 2d, la tête de découpe 31 est déplacée dans un plan P parallèle au plan (Y, Z) avec l'outil de perforation 3112 orienté par rapport à ce plan P, de telle sorte que le mouvement de va-et-vient A, B est transversal, et de préférence perpendiculaire à ce plan P, et dans le cas d'une découpe ou prédécoupe des parois 2e ou 2f la tête de découpe 31 est déplacée dans un plan P parallèle au plan (X, Y) avec l'outil de perforation 3112 orienté par rapport à ce plan P, de telle sorte que le mouvement de va-et-vient A, B est transversal, et de préférence perpendiculaire à ce plan P,.

Ce trajet de découpe prédéfini suivi par la tête de découpe 31 peut avoir un profil très varié et notamment peut être rectiligne et/ou courbe, la courbure éventuelle du trajet pouvant étant obtenue par rotation progressive de la tête de découpe 31 par le bras robotisé 30 autour d'un axe de rotation central de manière à adapter l'orientation du plan de découpe Pd de l'outil de perforation.

Dans un autre variante, l'unité de commande 32 peut également commander le bras robotisé 30 de manière à déplacer la tête de découpe 31 dans une direction transversale, et de préférence perpendiculaire, à la direction du mouvement va-et-vient (A,B) de l'outil de perforation 3112 en suivant un trajet qui n'est pas nécessairement dans un plan.

Le trajet de découpe peut être stocké dans une mémoire de l'unité de commande 32. Il est possible également de stocker dans cette mémoire plusieurs trajets de découpe différents pouvant être sélectionnés par un opérateur. Il est également possible de prévoir une interface permettant à un opérateur de définir ou de paramétrer le trajet de découpe.

Le ressort 312, qui est comprimé, permet pendant ce déplacement de la tête de coupe 31, de repousser en translation la partie mobile 311 de la tête de découpe 31 par rapport à la partie fixe 310 de la tête de découpe 31, de manière maintenir avec une pression suffisante la face d'appui 3111a de la semelle 3111 au contact de cette paroi de la boîte 2 à découper, ce qui permet de compenser le cas échéant automatiquement d'éventuels défauts de planéité de la paroi de la boîte 2.

A chaque mouvement de va-et-vient, l'outil de perforation 3112 perfore et passe à travers la paroi de la boîte 2, de préférence sans enlèvement de matière. La géométrie et les dimensions de la perforation dépendent de la section transversale de l'outil de perforation 3112.

Le déplacement de la tête de découpe 31 le long d'un trajet de découpe prédéfini permet de réaliser des perforations successives dans la paroi de la boîte 2 le long de ce trajet de découpe.

La vitesse de déplacement de la tête de découpe 31 est en pratique lente par rapport à la vitesse de déplacement rapide de l'outil de perforation 3112 au cours de ses mouvements va-et-vient répétitifs .

A titre d'exemple non limitatif de l'invention, la cadence du mouvement de va-et-vient de l'outil de perforation 3112 peut par exemple être de l'ordre de 50 mouvements va-et-vient par seconde avec une course de l'ordre de 10mm entre les deux positions extrêmes en translation de l'outil de perforation 3112, et la vitesse de déplacement de la tête de découpe 31 peut par exemple être de l'ordre de 500mm/s.

Ainsi, lors déplacement de la tête de découpe 31 transversalement au mouvement de va-et-vient de l'outil de perforation 3112, cet outil de perforation n'exerce pas, ou quasiment pas, sur la paroi de la boîte 2, et le cas échéant sur des articles contenus dans la boîte, d'effort latéral dans la direction de déplacement de la tête de découpe 31, et exerce sur la paroi de la boîte 2, et le cas échéant sur des articles contenus dans la boîte, exclusivement ou quasi exclusivement un effort perpendiculaire à la paroi de la boîte (c'est-à-dire dans la direction du mouvement de va-et-vient). Il en résulte que les risques de détériorer des articles contenus dans la boîte en les coupant est moins important que dans les cas des solutions techniques décrites par exemple dans les demandes de brevet européen EP 3 412 416 et EP 1 958 112.

Au surplus, dans la solution de l'invention l'outil de perforation peut avantageusement avoir un profil courbe et être dépourvu d'arête vive tranchante, à la différence des solutions techniques décrites dans les demandes de brevet européen EP 3 412 416 et EP 1 958 112, ce qui contribue à diminuer les risques détérioration d'un article en cas de contact avec l'outil de perforation.

Dans l'invention, la tolérance sur la distance de pénétration de l'outil de perforation 3112 à travers la paroi de la boîte 2 est également plus importante que dans les solutions techniques décrites dans les demandes de brevet européen EP 3 412 416 et EP 1 958 112. Il en résulte que l'installation peut être utilisée pour découper des boîtes dans une plus large gamme d'épaisseurs de paroi et/ou peut être utilisée de manière efficace pour découper une paroi boîte qui n'est pas parfaitement plane, mais qui peut être déformée, et notamment bombée comme dans le cas des figures 8 et 9. La mise en œuvre d'une découpe par perforation au moyen d'un outil de perforation permet également de découper ou prédécouper plus facilement des parois de boîtes ayant une épaisseur plus importante comparativement notamment aux solutions techniques décrites dans les demandes de brevet européen EP 3 412 416 et EP 1 958 112.

Au surplus, dans le cas d'une paroi de boîte bombée (figure 8 et 9), la mise en œuvre d'une face d'appui 3111a permet, au moyen du bras robotisé 30 ou équivalent, d'exercer sur cette paroi une pression mécanique, qui peut avantageusement permettre d'aplanir la paroi bombée de la boîte lors du déplacement de la tête de découpe 31.

Une fois que la découpe ou prédécoupe a été réalisée, l'unité de commande pilote le bras robotisé 30, de manière à éloigner la tête de découpe 31 de la paroi de la boîte 2 de manière à ce que la semelle 3111 ne soit plus en contact avec la paroi de la boîte ; dans ce cas la deuxième partie mobile 311 de la tête de découpe 31 reprend, sous la poussée du ressort de compression 312, sa position de repos de la figure 4 dans laquelle le ressort 312 est moins comprimé.

En fonction de la dimension de l'outil de perforation 3112, mesurée dans la direction de déplacement de la tête de découpe 31, de la cadence du mouvement de va-et-vient de l'outil de perforation 3112 et de la vitesse de déplacement de la tête de découpe 31, il est possible :
(a) de réaliser le long du trajet de découpe une ligne de découpe continue, les perforations successives étant jointives,
   ou
(b) de réaliser le long du trajet de découpe une ligne de prédécoupe discontinue dans laquelle les perforations sont plus ou moins espacées l'une de l'autre le long du trajet de découpe.

Ainsi, par exemple, pour une même cadence du mouvement de va-et-vient de l'outil de perforation 3112 et pour une même de la vitesse de déplacement de la tête de découpe 31, un opérateur peut mettre en œuvre l'option (a) ou (b) ci-dessus en choisissant l'outil de perforation ayant la dimension appropriée. La sélection ou le changement d'outil de perforation peut également être automatisé.

Il est également possible pour un même outil de perforation 3112, d'ajuster la vitesse de rotation du moteur 3114, de ce fait la cadence du mouvement va-et-vient de l'outil de perforation et/ou la vitesse de déplacement de la tête de découpe 31 rapport à la boîte 2, de manière à mettre en œuvre automatiquement l'option (a) et/ou l'option (b).

Lorsque l'on met en œuvre l'option (a) susvisée et que la boîte 2 est bourrée avec un nombre important d'articles, il peut arriver que sous la pression des articles, la boîte qui a été découpée s'ouvre accidentellement, ce qui fait sortir malencontreusement et de manière non contrôlée plusieurs articles en dehors de la boîte 2. Dans ce cas, il est préférable de mettre en œuvre l'option (b) susvisé, la prédécoupe de la boîte 2 empêchant la sortie accidentelle d'articles en dehors de la boîte pendant toutes les manipulations de cette boîte prédécoupée. Avec cette option (b), lorsque l'on souhaite accéder aux articles contenus dans la boîte pour pouvoir les retirer un à un manuellement (opération de « picking »), il suffit à un opérateur final d'ouvrir la boîte 2 en déchirant à main la ou les parois de la boîte le long de la ou des lignes de prédécoupe, en s'assurant que les articles restent bien en place dans la boîte ou le cas échéant en retirant le surplus d'articles.

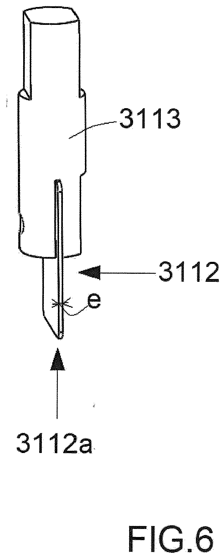

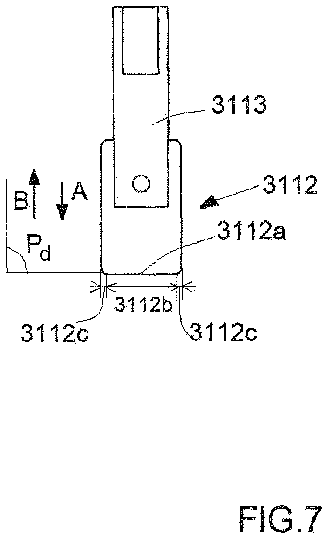

### Exemple particulier d'outil de perforation 3112 (Figures 6 et 7)

On a représenté sur les figures 6 et 7 un exemple particulier d'outil de perforation 3112, monté à l'extrémité d'une broche porte-outil 3113. Dans cet exemple particulier, et non limitatif de l'invention, cet outil de perforation 3112 est une lame métallique, par exemple en acier, de faible épaisseur e, comportant un bord de découpe 3112a de longueur L (figure 7) correspondant à la largeur de la lame. Ce bord de découpe 3112a s'étend en longueur (L) transversalement, et de préférence perpendiculairement, à la direction du mouvement de va-et-vient (A, B) de l'outil de perforation 3112.

De préférence, ce bord de découpe 3112a de faible épaisseur e est arrondi et de préférence ne comporte pas d'arête vive tranchante, à la différence du filet tranchant d'une lame de coupe effilée et tranchante, telle que celle qui est nécessairement utilisée dans les solutions techniques décrites dans les demandes de brevet européen EP 3 412 416 et EP 1 958112.

Plus particulièrement, ce bord de découpe 3112a comporte (figure 6) une partie centrale rectiligne 3112b, qui se termine à chaque extrémité par une partie de transition 3112c arrondie.

Cet outil de perforation 3112 particulier des figures 6 et 7 permet de réaliser dans la paroi d'une boîte 2, au cours d'un mouvement de va-et-vient, une fente rectiligne, par perforation de la paroi, de préférence sans enlèvement de matière. Cette fente rectiligne présente une faible largeur correspondant à l'épaisseur e de l'outil de perforation 3112 et une longueur maximale correspondant à la longueur L susvisée de l'outil de perforation 3112.

On a représenté sur la figure 7, le plan de découpe Pd de cet outil de perforation 3112. Le mouvement de translation va-et-vient (A, B) de l'outil de perforation est parallèle à ce plan de découpe Pd. Au cours d'une découpe ou prédécoupe d'une paroi d'une boîte 2, la tête de découpe 31 est orientée par rapport à cette paroi, au moyen du bras robotisé 30 ou équivalent, de telle sorte que ce plan de découpe Pd est perpendiculaire à la paroi de la boîte 2.

Au cours d'une découpe ou prédécoupe d'une paroi d'une boîte 2, la tête de découpe 31 est d'une manière générale déplacée par rapport à cette paroi, au moyen du bras robotisé 30 ou équivalent, dans une direction qui est parallèle à ce plan de découpe Pd et qui est transversale, et de préférence perpendiculaire au mouvement de translation va-et-vient (A , B) de l'outil de perforation dans ce plan de coupe Pd, et le bord de découpe 3112 de longueur L est orienté parallèlement à la direction de déplacement de la tête de découpe 31.

Pour une cadence donnée du mouvement de va-et-vient de l'outil de perforation et une vitesse de déplacement donnée de la tête de découpe 31, un opérateur peut par exemple décider de mettre en œuvre l'option (a) ou l'option (b) susvisée, en sélectionnant judicieusement l'outil de perforation du type des figures 6 et 7 ayant la longueur L susvisée adaptée.

L'invention n'est pas limitée à cet exemple particulier d'outil de perforation 3112 des figures 6 et 7, l'outil de perforation pouvant avoir une toute autre géométrie en fonction notamment de la géométrie et des dimensions de perforation souhaitées.

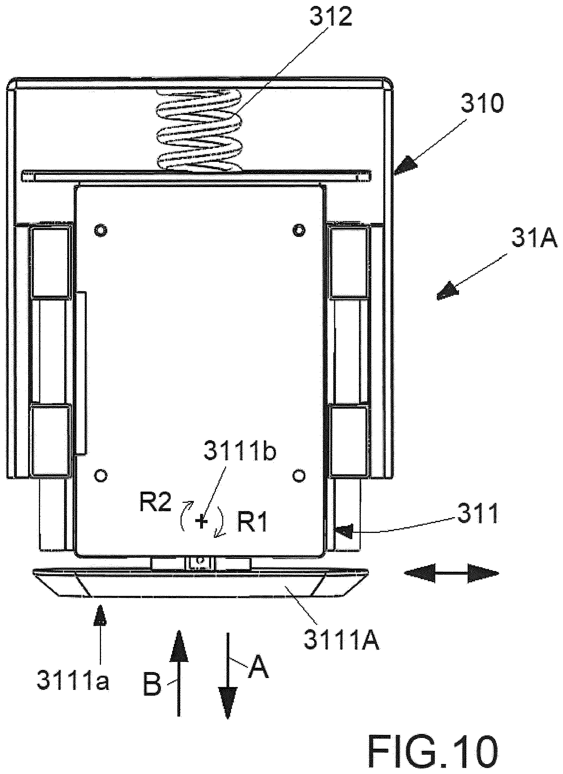

### Perfectionnement de la tête de découpe - Figures 10 à 12

On a représenté sur les figures 10 à 12 une tête de découpe 31A perfectionnée, qui se différencie de la tête de découpe 31 précédemment décrite uniquement par la mise en œuvre d'une semelle 3111A, qui est pivotante autour d'un axe de rotation 3111b, dans les deux sens de rotation opposés R1 et R2. Cet axe de rotation 3111b est perpendiculaire au plan de découpe Pd de l'outil de perforation 3112.

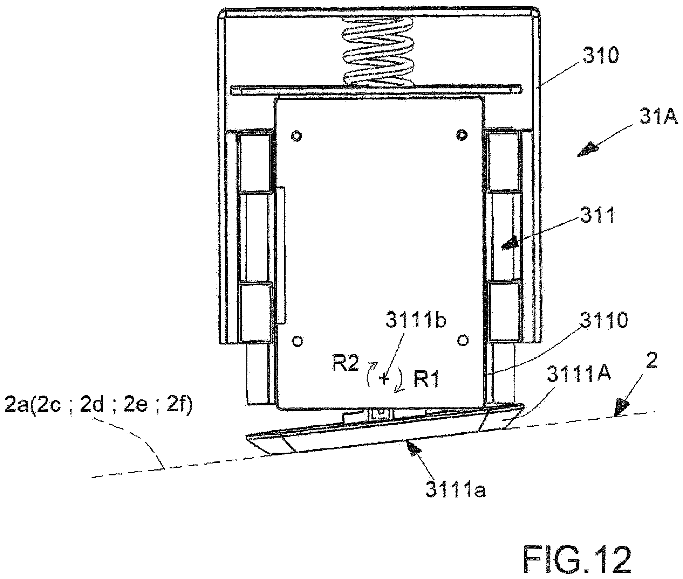

L'angle de pivotement maximum de la semelle 3111 est de préférence limité, dans chaque sens de rotation R 1, R2, par exemple par butée en rotation de semelle 3111A contre le carter 3110, tel que cela est illustré sur la position particulière de la semelle 3111A de la figure 12 pour le sens de rotation R1.

Lorsque que la paroi de la boîte 2 à découper n'est pas plane, mais est par exemple bombée comme dans le cas des figures 8 et 9, ce pivotement de la semelle 3111A autour de l'axe 3111b permet avantageusement une modification automatique de l'inclinaison de la face d'appui 3111a par rapport à partie fixe 310 de la tête de découpe 31A, la semelle pivotant suivant la courbure éventuelle de la paroi d'une boîte 2 (Figure 12- paroi en pointillés).

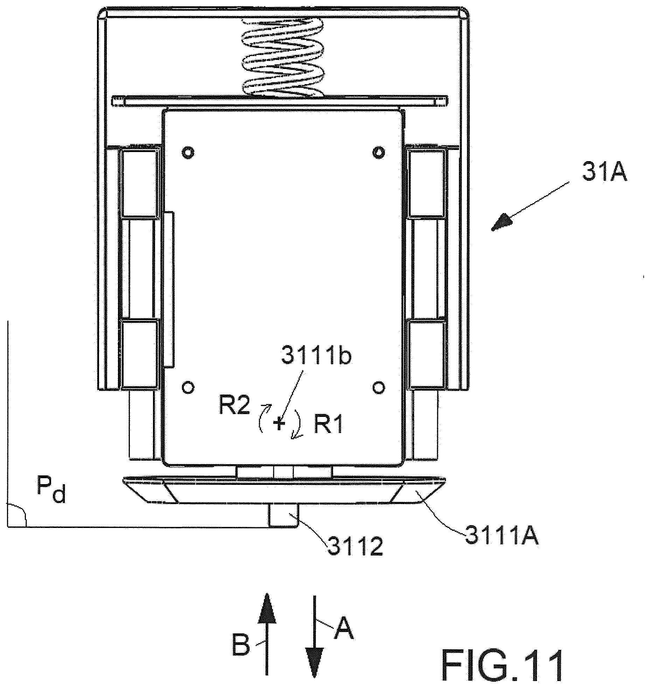

Plus particulièrement, mais non nécessairement, l'axe de rotation 3111b de la semelle 3111A peut être pourvu de ressorts de compression ou équivalent qui exercent sur la semelle 3111A pivotante des forces de rappel la ramenant dans sa position en rotation centrale de repos de la figure 10 ou 11, en l'absence de contrainte sur la face d'appui 3111a de la semelle.

### Moyens 5 de calage automatique d'une boîte 2 en position de découpe

En référence à la variante particulière des figures 1, 2, 3A, 3B, l'installation 1 comporte également des moyens de calage 5, qui sont commandés par l'unité de commande 32, de manière à permettre le calage automatique d'une boîte 2 en position de découpe (figure 1) par rapport au dispositif de découpe 3. Ce calage automatique consiste à immobiliser chaque boîte 2 dans une position de découpe prédéfinie dans l'espace, dans le référentiel du dispositif de découpe, avec toujours la même orientation de la boîte dans cette position de découpe.

Plus particulièrement dans la variante particulière des figures 1, 2, 3A, 3B , et de manière non limitative de l'invention, les moyens de calage 5 comportent un convoyeur 50 positionné au voisinage du dispositif de découpe 3 et permet de transporter automatiquement chaque boîte 2 jusqu'à une position de découpe, avec la paroi de fond 2b de chaque boîte 2 positionnée dans un plan de calage horizontal, parallèle au plan (X,Z)

Ce convoyeur 50 comporte par exemple des rouleaux motorisé 50a, qui sont orientés perpendiculairement à l'axe X dans un plan horizontal, et permettent de transporter chaque boîte 2 dans la direction de transport longitudinale de l'axe X

Les moyens de calage 5 comportent également :
- une butée avant 51a, qui est mobile verticalement, et qui est actionnée par un vérin linéaire bidirectionnel 51b, par exemple un vérin électrique ou pneumatique,
- une butée latérale 52a, qui est mobile horizontalement, et qui est actionnée par un vérin linéaire bidirectionnel 52b, par exemple un vérin électrique ou pneumatique,
- une butée latérale 53, qui est fixe (figure 1) et positionnée en vis à vis de la butée latérale 52a mobile.

La butée avant 51a est positionnée en sortie du convoyeur 50 et peut être déplacée verticalement en translation au moyen du vérin 51b, soit vers le haut jusqu'à une position de butée (figure 1), dans laquelle elle bloque en translation chaque boîte 2 dans la direction de transport longitudinale de l'axe X, soit vers le bas jusqu'à une position escamotée dans laquelle elle ne dépasse pas des rouleaux motorisés et ne fait pas obstacle au passage d'une boîte 2.

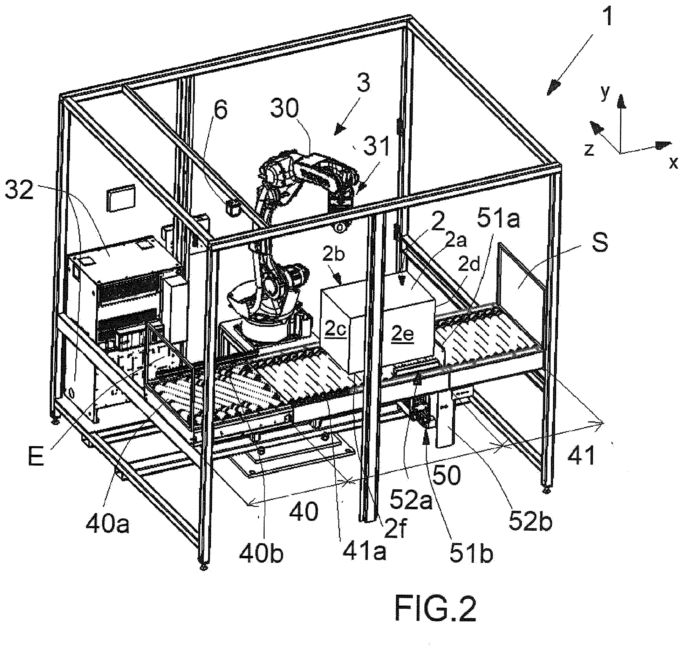

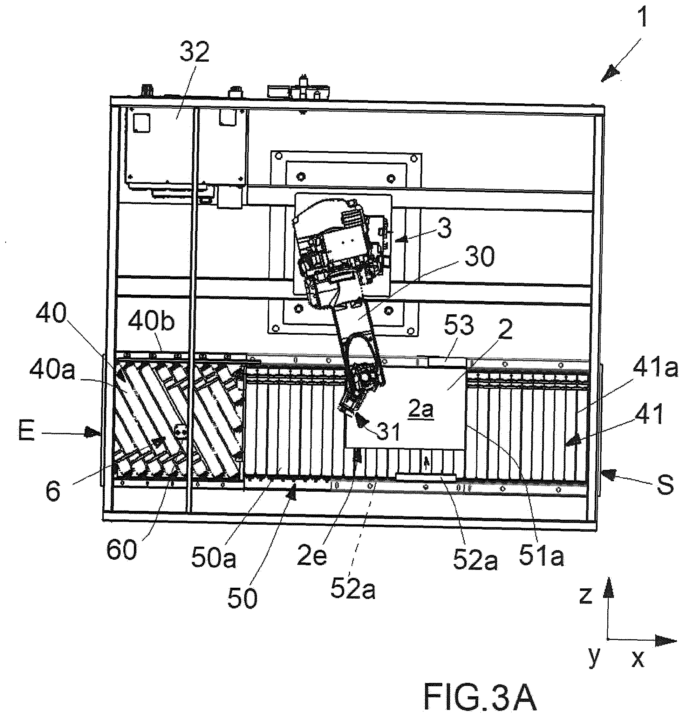

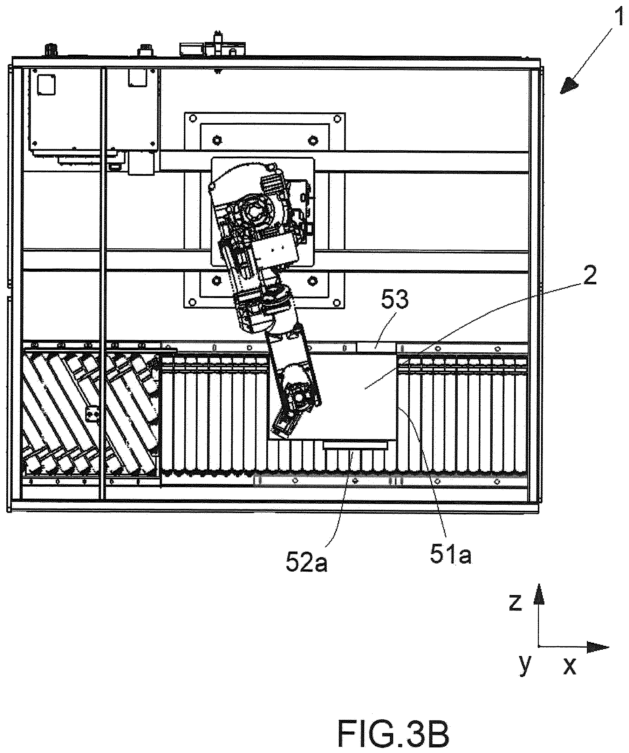

La butée latérale 52a peut être déplacée en translation dans un plan horizontal au moyen du vérin 52b entre une position latérale dite « inactive » (figures 2 et 3A), dans laquelle elle est suffisamment écartée de l'autre butée latérale 53 pour ne pas faire obstacle au passage d'une boîte 2 transportée sur le convoyeur de calage 50, et une position dite « active » (figure 3B), dans laquelle elle est en contact avec la paroi latérale 2e d'une boîte 2 serrée entre la butée latérale fixe 53 et ladite butée latérale mobile 52a.

Les moyens de calage 5 permettent de caler automatiquement en position de découpe successivement chaque boîte 2 par rapport au dispositif de découpe 3, en immobilisant chaque boîte 2 dans un plan de calage parallèle au plan (X, Z) (plan de convoyage des boîtes 2) avec la paroi avant 2c (figure 1) de chaque boîte 2 bloquée longitudinalement par la butée avant 51a à une position prédéfinie dans la direction longitudinale de convoyage (axe X), avec l'une 2f des parois latérales immobilisée latéralement à une position prédéfinie dans la direction latérale de l'axe Z au moyen des deux butées latérales 52a et 53, et avec une orientation prédéfinie de chaque boîte dans laquelle les faces avant 2c et arrière 2d sont orientées perpendiculairement à la direction longitudinale de convoyage (axe X) et les faces latérales 2e et 2f sont orientées parallèlement à la direction longitudinale de convoyage (axe X).

### Autres éléments optionnels de l'installation des figures 1, 2, 3A, 3B

En référence à la variante particulière des figures 1, 2, 3A, 3B, l'installation 1 comporte également des moyens de convoyage 4 additionnels de chaque boîte 2

Plus particulièrement dans la variante particulière des figures 1, 2, 3A, 3B, et de manière non limitative de l'invention, les moyens de convoyage 4 comportent un convoyeur d'entrée 40 à rouleaux motorisés 40a et convoyeur de sortie 41 à rouleaux motorisés 41a.

Le convoyeur d'entrée 40 permet de transporter chaque boîte 2 dans la direction de transport longitudinale de l'axe X, depuis l'entrée E de l'installation jusqu'au convoyeur 50 central. De préférence, tel qu'illustré (figure 2), mais non nécessairement, les rouleaux 40a motorisés de ce convoyeur d'entrée 40 sont inclinés d'environ 20° par rapport à l'axe X dans un plan horizontal, de telle sorte que chaque boîte 2, lors de son passage sur le convoyeur d'entrée 40, est également déplacée dans la direction latérale de l'axe Y, jusqu'à un guide longitudinal 40b formant une butée latérale fixe au niveau du convoyeur 40.

Dans une autre variante, les rouleaux motorisés 40a du convoyeur d'entrée pourraient être orientés perpendiculairement à la direction de convoyage des boîtes

Le convoyeur de sortie 41 permet de transporter chaque boîte 2 dans la direction de transport longitudinale de l'axe X, depuis le convoyeur 50 jusqu'à la sortie S de l'installation. Les rouleaux motorisés 41a de convoyeur de sortie 41 sont orientés perpendiculairement à l'axe X.

Dans une autre variante, l'installation de l'invention peut ne pas comporter les deux convoyeurs 40 et 41 ou peut comporter un unique convoyeur entre l'entrée E et la sortie S en remplacement des convoyeurs 40, 50 et 41 de l'installation de la figure 1.

En référence à la figure 2 ou 3A, l'installation 1 comporte également des moyens 6 de mesure sans contact, qui permettent de déterminer automatiquement les dimensions d'une boîte 2 introduite dans l'installation 1 dans la direction des trois axes orthogonaux X, Y, Z.

Ces moyens de mesure sans contact 6 comportent par exemple une caméra 60, qui fixée au-dessus du convoyeur d'entrée 40, de telle sorte que chaque boîte 2 transportée par le convoyeur d'entrée passe dans le champ de vision de la caméra 60.

Cette camera 60 permet d'acquérir une image de chaque boîte 2, par exemple, et de manière connue en soi, sous la forme d'un nuage de points 3D, et est associée à un logiciel de traitement de données, connu en soi, qui permet de calculer automatiquement les dimensions réelles de la boîte 2 traversant le champ de vision de la caméra 60.

Plus particulièrement et de manière avantageuse, ces moyens de mesure 6 sans contact permettent de déterminer automatiquement les dimensions réelles de chaque boîte 2 dans la direction des trois axes orthogonaux X, Y, Z, quelle que soit l'orientation de la boîte 2 sur le convoyeur d'entrée 40 et les cas échéant pendant que la boîte 2 est en mouvement et est déplacée par rapport aux moyens de mesure 6 à travers le champ de vision de la caméra 60.

La mise en œuvre de ces moyens de mesure sans contact 6 permet de réaliser automatiquement au moyen de l'installation 1 des découpes ou des prédécoupes dans des boîtes 2 pouvant avoir des dimensions différentes, l'installation 1 étant ainsi multiformat.

Dans une autre variante, les moyens de mesure sans contact 6 peuvent permettre de mesurer une seule dimension de la boîte ou seulement deux dimensions de la boîte selon deux axes orthogonaux.

Dans une autre variante, les moyens de mesure sans contact 6 peuvent en tout ou partie être remplacés par des moyens de mesure venant au contact de la boîte 2. Par exemple il est possible de mesurer la dimension de la boîte dans la direction de l'axe Z (Figure 2) en mesurant au moyen d'un capteur le déplacement linéaire de la butée latérale 52a ou de la tige du vérin 52b qui lui est associé.

Dans le cas particulier de l'installation des figures 1, 2, 3A, 3B, une autre variante, les moyens de mesure 6 permettent une mesure des dimensions de chaque boîte 2 avant que la boîte ne soit découpée ou prédécoupée. Dans une autre variante, les moyens de mesure peuvent être conçus et positionnés de manière à permettre une mesure des dimensions de chaque boîte pendant que la boîte 2 est découpée ou prédécoupée.

Dans une autre variante de réalisation, lorsque l'installation 1 est de type mono-format et est utilisée avec des boîtes 2 identiques de même géométrie, il est possible de ne pas mettre en œuvre de moyens de mesure 6, les dimensions des boîtes étant prédéfinies et par exemple paramétrées dans l'installation.

Dans une autre variante de réalisation, il est également possible d'identifier chaque boîte 2 au moyen d'un identifiant, et par exemple au moyen d'un code-barres ou d'un tag RFID contenant ledit identifiant, chaque identifiant étant caractéristique de la géométrie et des dimensions de la boîte. Dans ce cas, l'installation ne comporte pas de moyens de mesure 6, mais comporte en amont de la position de découpe des boîtes un lecteur qui permet de lire automatiquement l'identifiant (codes-barres, tag RFID, ...) porté par la boîte, et de communiquer en temps réel cet identifiant à l'unité de commande 32, de telle sorte que l'unité de commande 32 utilise la géométrie et les dimensions de la boîte associées à cet identifiant pour réaliser la découpe ou prédécoupe automatique de la boîte.

### Exemples de fonctionnement de l'installation des figures 1, 2, 3A, 3B

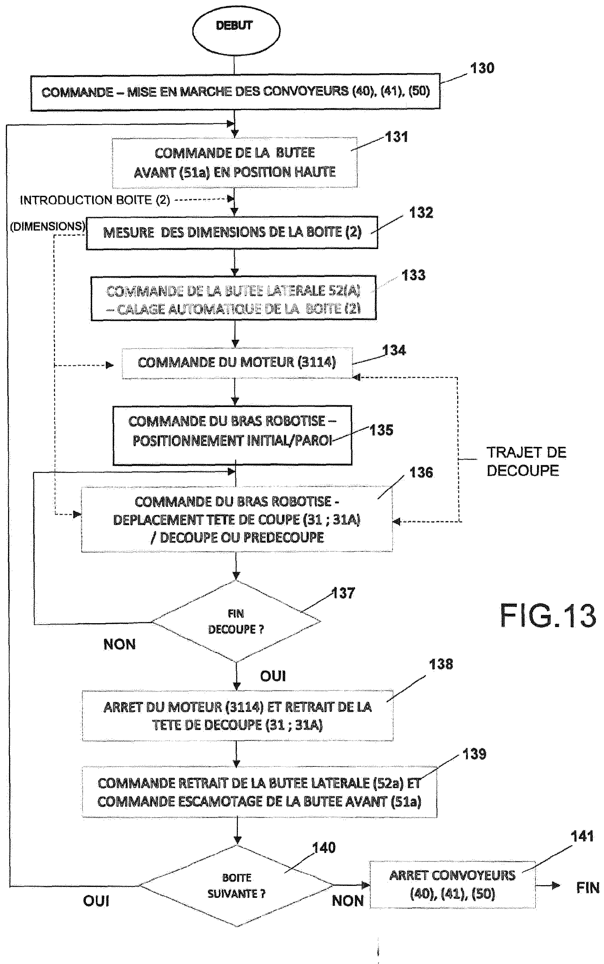

Un premier exemple de fonctionnement de l'installation des figures 1, 2, 3A, 3B va être succinctement décrit en référence à l'organigramme de la figure 13, dont les étapes sont exécutées automatiquement par l'unité de commande 32.

Au démarrage, l'unité de commande 32 commande (Etape 130) la mise en marche des rouleaux motorisés des convoyeurs 40, 41, et 50, puis commande (Etape 131) le vérin 51b associé à la butée avant 51a, de manière à amener cette butée avant 51a dans sa position haute de la figure 1.

Une fois ces étapes réalisées un opérateur peut introduire manuellement à l'entrée E de l'installation, une boîte 2 à découper en la posant sur le convoyeur d'entrée 40, avec une orientation quelconque de la boîte 2.

Dans une autre variante, les boîtes 2 peuvent être alimentées à l'entrée E de l'installation 1 par un convoyeur externe sur lequel elles ont été déposées l'une derrière l'autre de manière espacée.

Le convoyeur d'entrée 40 achemine successivement chaque boîte 2 jusqu'au convoyeur central 50, en lui faisant traverser le champ de vison de la caméra 60 des moyens de mesure 6.

Au niveau du convoyeur d'entrée 40, l'installation comporte par exemple un capteur de présence, de type photocellule, qui permet de détecter automatiquement la présence d'une boîte 2 sur le convoyeur amont 40, dans le champ de vision de la caméra 60, et qui envoie un signal de détection à l'unité de commande 32. Lorsque ce capteur de présence détecte le passage d'une boîte 2 dans le champ de vision de la caméra, (Etape 132), l'unité de commande 32 commande automatiquement les moyens de mesure 6, afin de réaliser automatiquement une acquisition d'une image de la boîte et de calculer automatiquement les dimensions de la boîte 2 le long des trois axes orthogonaux X, Y, Z.

Le convoyeur central 50 achemine la boîte 2 jusqu'à ce qu'elle soit bloquée dans la direction de convoyage par la butée avant 51a qui est en position haute.

L'unité de commande 32 (Etape 133) commande le vérin 52b associé à la butée latérale mobile 52a, de manière à amener cette butée latérale 52a contre la paroi latérale 2e de la boîte 2, le cas échéant en repoussant la boîte 2, et si nécessaire en la réorientant, en direction de la butée latérale fixe 53, et ce jusqu'à ce que la boîte 2 soit automatiquement immobilisée en étant serrée entre la butée latérale fixe 53 et la butée latérale mobile 52a. A l'issue de cette étape, la boîte 2 est automatiquement calée en position de découpe par rapport au bras robotisé 30 du dispositif de découpe.

Une fois ce calage effectuée, l'unité de commande 32 (Etape 134) commande la mise en marche du moteur 3114 de la tête de découpe 31 (ou 31A) de manière à mettre en mouvement (va-et-vient répétitif) l'outil de perforation 3112.

Ensuite, l'unité de commande 32 (Etape 135) commande le bras robotisé 30, à partir des dimensions de la boîte 2 mesurées précédemment, de manière à positionner la tête de découpe 31 dans sa position initiale de découpe, avec la semelle 3111 en appui contre la paroi à découper. Cette paroi 2a,2c,2d,2e ou 2f et cette position initiale de la tête de découpe 31 dépendent du trajet de découpe mis en œuvre.

Ensuite, l'unité de commande 32 (Etape 136) commande le bras robotisé 30 de manière à le déplacer par rapport à la boîte en suivant le trajet de découpe programmé.

La tête de découpe 31 (ou 31A) est ainsi déplacée par le bras robotisé 30 de manière à réaliser automatiquement, par perforations successives au moyen de l'outil de perforation 3112, une ou plusieurs lignes de découpe ou de prédécoupe dans une ou plusieurs parois de la boîte, à l'exception de la paroi de fond 2b de la boîte 2.

Lorsque l'opération de découpe est terminée (Test 137), l'unité de commande 32 (Etape 138) commande l'arrêt du moteur 3114 de la tête de découpe et commande le bras robotisé 30 de manière écarter la tête de découpe 31 (ou 31A) de la boîte 2 et à l'amener dans une position d'attente suffisamment éloignée des convoyeurs 40, 41, et 50.

Ensuite, l'unité de commande 32 (Etape 139) commande le vérin 52b associé à la butée latérale mobile 52a, de manière à écarter cette butée latérale 52b de la boîte 2 et commande le vérin 51b associé à la butée avant 51a, de manière à escamoter cette butée avant 51a dans sa position basse, dans laquelle elle ne fait plus obstacle au passage de la boîte 2 sur le convoyeur de sortie 41. La boîte 2 qui a été découpée est ainsi évacuée sur le convoyeur de sortie en direction de la sortie S de l'installation.

Si une boîte 2 suivante doit être découpée (test 140), l'unité de commande 32 reboucle automatiquement à l'étape 131. Dans le cas contraire, l'unité de commande 32 (Etape 141) commande l'arrêt des convoyeurs 40, 41 et 50.

L'invention n'est pas limitée à la mise en œuvre des étapes susvisées de l'organigramme de la figure 13.

Dans une autre variante de réalisation, l'unité de commande 32 peut être programmée de manière à commander en temps masqué les moyens de mesure 6 et le dispositif de découpe par perforation 3, de telle sorte qu'une opération de découpe par perforation d'une boîte calée en position sur le convoyeur 50 est réalisée pendant que les moyens de mesure 6 réalisent l'acquisition de la ou des dimensions de la boîte suivante à découper qui est transportée sur le convoyeur d'entrée. Cette commande en temps masqué permet avantageusement d'augmenter la cadence de découpe ou prédécoupe des boîtes.

Par ailleurs, dans une autre variante de réalisation, les convoyeurs 40, 50 et 41 peuvent automatiquement être commandés en cascade en étant mis en marche et arrêtés l'un après l'autre par l'unité de commande 32. Dans ce cas, l'installation comporte par exemple :
- à l'entrée du convoyeur 40, un premier capteur de présence, de type photocellule, qui permet de détecter automatiquement la présence du boîte 2 à l'entrée du convoyeur amont 40,
- au niveau de la région de mesure des dimensions de la boîte, un deuxième capteur de présence de type photocellule,
- à la sortie du convoyeur d'entrée 40, un troisième capteur de présence, de type photocellule, qui permet de détecter automatiquement la présence d'une boîte 2 à la sortie du convoyeur amont 40,
- au niveau de la position de découpe d'une boîte, un quatrième capteur de présence, de type photocellule, qui permet de détecter automatiquement la présence du boîte 2 en position de découpe sur le convoyeur 50,
- sensiblement au milieu du convoyeur de sortie, un cinquième capteur de présence, de type photocellule, qui permet de détecter automatiquement la présence du boîte 2 sur le convoyeur de sortie 41,
- à la sortie du convoyeur de sortie 41, un sixième capteur de présence, de type photocellule, qui permet de détecter automatiquement la présence du boîte 2 à la sortie du convoyeur de sortie 41,

Ces capteurs de présence envoient chacun un signal de détection à l'unité de commande 32, qui est programmée pour commander automatiquement la mise en marche et l'arrêt de chaque convoyeur 40, 50, 41, en fonction de ces signaux de détection.

Par exemple, lorsque le premier capteur de présence détecte la présence du boîte 2 à l'entrée du convoyeur amont 40, l'unité de commande 32 commande automatiquement la mise en marche de ce convoyeur d'entrée 40. Ensuite, lorsque le deuxième capteur de présence détecte la présence du boîte 2 dans le champ de vision de la caméra 60, l'unité de commande 32 commande automatiquement l'arrêt de ce convoyeur d'entrée 40. Une fois l'opération de mesure des dimensions de la boîte réalisée, l'unité de commande 32 vérifie au moyen du signal de détection délivré par le quatrième capteur de présence, qu'aucune boîte n'est présente sur le convoyeur 50. Si tel est le cas, l'unité de commande 32 commande automatiquement la mise en marche du convoyeur d'entrée pour acheminer la boîte jusqu'à convoyeur de calage 50. Ensuite, lorsque le troisième capteur de présence détecte la présence d'une boîte 2 à la sortie du convoyeur d'entrée 40, l'unité de commande 32 commande automatiquement la mise en marche du convoyeur de calage 50 pour acheminer la boîte jusqu'à sa position de découpe, en butée contre la butée avant 51a. Une fois le calage automatique de la boîte en position de découpe effectuée, l'unité de commande 32 commande l'arrêt du convoyeur calage 50. Puis, une fois l'opération de découpe et/ou de prédécoupe de la boîte effectuée, l'unité de commande 32 vérifie au moyen des signaux de détection délivrés par le cinquième capteur de présence et par le sixième capteur de présence, qu'aucune boîte n'est présente sur le convoyeur de sortie 41. Si tel est le cas, l'unité de commande 32 commande automatiquement le retrait en position inactive de la butée latérale 52a et ensuite l'escamotage en position basse de la butée avant 51a, puis la mise en marche du convoyeur de calage 50 et du convoyeur de sortie 41. Lorsque le cinquième capteur de présence détecte la présence d'une boîte 2 sur le convoyeur de sortie, l'unité de commande 32 commande automatiquement l'arrêt du convoyeur 50. Enfin lorsque le sixième capteur de présence détecte la présence d'une boîte 2 à la sortie du convoyeur de sortie 41, l'unité de commande 32 commande automatiquement l'arrêt du convoyeur de sortie 41.

L'installation 1 qui a été décrite permet de réaliser automatiquement des lignes de coupe ou de prédécoupe dans une ou une plusieurs parois boîte en suivant un trajet de découpe qui peut avoir des profils très variés.

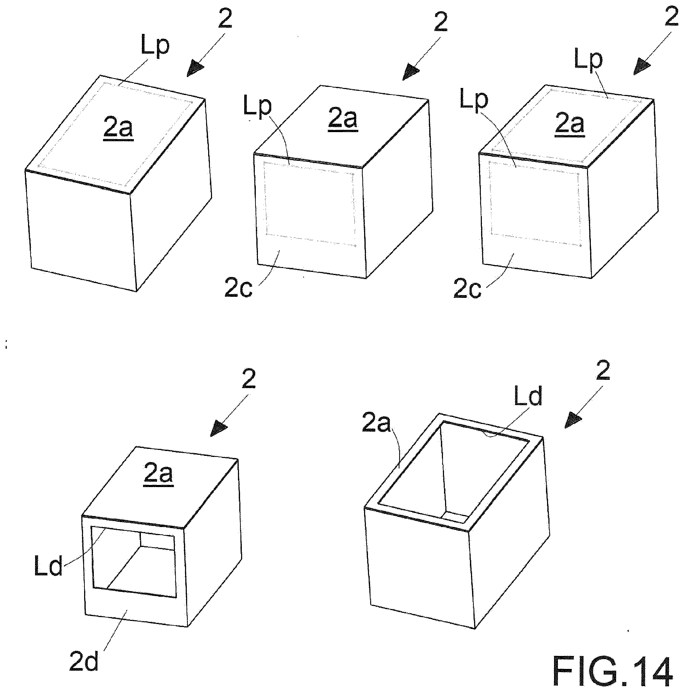

On a représenté sur la figure 14 plusieurs exemples de boîtes avec lignes de découpe Ld continues ou lignes de prédécoupes Lp discontinues pouvant être réalisées avec cette installation, étant précisé que ces exemples de boîtes découpées ou prédécoupées sont donnés uniquement à titre illustratif et ne sont pas limitatifs, ni exhaustifs, de l'invention.

## Revendications

1. Installation de découpe automatisée et/ou de prédécoupe automatisée de boîtes, ladite installation comportant un dispositif de découpe (3) et des moyens de calage (5) d'une boîte en position de découpe par rapport au dispositif de découpe (3), le dispositif de découpe (3) comportant une tête de découpe par perforation (31 ; 31A) et un dispositif (30) de déplacement permettant un positionnement et un déplacement automatisés, en suivant un trajet de découpe, de ladite tête de découpe par perforation (31 ; 31A) par rapport à une boîte (2), qui est calée en position de découpe par rapport au dispositif de découpe (3), ladite tête de découpe par perforation (31 ; 31A) comportant un outil de perforation (3112), qui est actionnable par un moteur (3114) de manière à avoir un mouvement de translation va-et-vient répétitif, et ladite installation comportant une unité de commande (32), qui est apte à commander le dispositif de découpe (3), de manière à pouvoir réaliser automatiquement une découpe (Ld) et/ou une prédécoupe (Lp) par perforations successives d'au moins une paroi d'une boîte (2) calée en position de découpe, au moyen de l'outil de perforation (3112) actionné par ledit moteur (3114) et par déplacement automatique de la tête de découpe par perforation (31 ; 31A) transversalement à la direction (A, B) du mouvement de va-et-vient de l'outil de perforation (3112) et en suivant ledit trajet de découpe.

2. Installation selon la revendication 2, dans laquelle l'unité de commande (32) est apte au cours d'une opération de découpe et/ou prédécoupe à commander le déplacement de la tête de découpe par perforation (31 ; 31A) dans un plan (P) qui est transversal, et de préférence perpendiculaire à la direction (A , B) du mouvement de va-et-vient de l'outil de perforation (3112) et en suivant ledit trajet de découpe dans ce plan.

3. Installation selon l'une quelconque des revendications précédentes, dans laquelle l'unité de commande (32) est apte à commander les moyens de calage (5), de manière à permettre un calage automatique d'une boîte (2) en position de découpe par rapport au dispositif de coupe (3).

4. Installation selon l'une quelconque des revendications précédentes, dans laquelle la tête de découpe par perforation (31 ; 31A) comporte une face d'appui (3111a), qui est destinée pendant une opération de découpe ou prédécoupe d'une boîte (2) à être positionnée contre une paroi de ladite boîte (2), et dans laquelle l'outil de perforation (3112) est actionnable par ledit moteur (3114) de manière à avoir un mouvement de translation va-et-vient (A , B) répétitif entre une position extrême de découpe dans laquelle au moins une partie de l'outil de perforation (3112) est en saillie par rapport à la face d'appui (3111a) et une position escamotée dans laquelle l'outil de perforation (3112) ne dépasse pas de la face d'appui (3111a), et de préférence dans laquelle l'outil de perforation (3112) traverse la face d'appui (3111a) au cours de son mouvement va-et-vient (A,B).

5. Installation selon la revendication 4, dans laquelle la tête de découpe par perforation (31A ; 31B) comporte une partie (310), qui est fixée au dispositif de déplacement automatique (30), une partie mobile (311) qui comporte ladite face d'appui (3111a) et qui est mobile et guidée en translation (T) par rapport à ladite partie fixe (310) dans une direction transversale à la face d'appui (3111a), et un moyen de compression élastique (312), et de préférence au moins un ressort de compression, qui est interposé entre la partie (310) fixe et la partie mobile (311), qui est apte à être compressé lorsque la partie mobile (311) est déplacée en translation en direction de la partie fixe, et qui à l'état compressé exerce sur la partie mobile (310) une force de poussée permettant de repousser en translation la partie mobile (311) par rapport à la partie fixe (310).

6. Installation selon l'une quelconque des revendications 4 à 5, comportant une semelle (3111 ; 3111A) dont l'une des faces forme ladite face d'appui (3111a), et de préférence dans laquelle la semelle (3111A) est apte à pivoter autour d'un axe de rotation (3111b) de manière à permettre une modification de l'inclinaison de la face d'appui (3111a).

7. Installation selon l'une quelconque des revendications précédentes, dans laquelle le dispositif (30) de déplacement automatique permet de déplacer au moins en translation ladite tête de découpe par perforation (31A ; 31B) dans les directions d'au moins deux axes orthogonaux, et de préférence dans les directions de trois axes orthogonaux (X, Y, Z), et plus préférenciellement dans laquelle le dispositif (30) de déplacement automatique permet une rotation de ladite tête de découpe par perforation (31A ; 31B) autour de chaque axe de translation de ladite tête de découpe par perforation.

8. Installation selon la revendication 7, dans laquelle le dispositif (30) de déplacement automatique comporte un bras robotisé six axes, à l'extrémité duquel est fixée la tête de découpe par perforation (31A ; 31B).

9. Installation selon l'une quelconque des revendications précédentes, dans laquelle l'outil de perforation (3112) est profilé de manière à perforer la paroi d'une boîte (2), sans enlèvement de matière, à chaque mouvement de va-et-vient de l'outil de perforation.

10. Installation selon l'une quelconque des revendications précédentes, dans laquelle l'outil de perforation (3112) présente un bord de découpe (3112a) qui est arrondi et dépourvu d'arête vive tranchante, et qui s'étend en longueur (L) transversalement, et de préférence perpendiculairement, à la direction du mouvement va-et-vient (A,B) de l'outil de perforation (3112).

11. Installation selon l'une quelconque des revendications précédentes, dans laquelle l'outil de perforation (3112) est profilé de manière à réaliser une fente dans la paroi d'une boîte (2) à chaque mouvement de va-et-vient de l'outil de perforation.

12. Installation selon l'une quelconque des revendications précédentes, comportant des moyens de mesure (6), de préférence sans contact, qui permettent de déterminer automatiquement la dimension d'une boîte (2) introduite dans l'installation, le long d'au moins un axe, plus particulièrement les dimensions d'une boîte le long d'au moins deux axes orthogonaux, et de préférence les dimensions d'une boîte, le long d'au moins trois axe orthogonaux (X, Y, Z), et l'unité de commande (32) est apte à commander automatiquement le dispositif (30) de déplacement automatique de la tête de découpe (31 ; 31A) en fonction de chaque dimension mesurée, et de préférence l'installation comportant au moins un convoyeur (41) permettant de déplacer successivement chaque boîte (2) au moins par rapport aux moyens de mesure (6).

13. Installation selon la revendication 12, dans laquelle les moyens de mesure (6) permettent de déterminer automatiquement la ou les dimensions de la boîte, quelle que soit l'orientation de la boîte sur le convoyeur (41) et/ou de déterminer automatiquement la ou les dimensions de la boîte pendant que la boîte (2) est en mouvement par rapport aux moyens de mesure (6).

14. Installation selon l'une quelconque des revendications 12 à 13, dans laquelle l'unité de commande (32) est apte à commander en temps masqué les moyens de mesure (6) et le dispositif de découpe (3), de telle sorte qu'une opération de découpe par perforation d'une boîte (2) en suivant un trajet de découpe est réalisée automatiquement pendant que les moyens de mesure (6) réalisent l'acquisition de la ou des dimensions de la boîte suivante à découper.

15. Installation selon l'une quelconque des revendications précédentes, dans laquelle les moyens de calage (5) d'une boîte (2) en position de découpe comportent un convoyeur de calage (50), qui et apte à transporter une boîte (2) jusqu'à sa position de découpe, une butée avant (51a) qui est mobile et qui est actionnable entre une position haute dans laquelle elle permet de bloquer, dans sa position de découpe et dans la direction de transport (X) dudit convoyeur de calage (50), une boîte (2) transportée sur ledit convoyeur de calage (50), et une position basse dans laquelle elle est escamotée et ne fait pas au obstacle au passage d'une boîte (2) transportée sur ledit convoyeur de calage (50), et deux butées latérales (53 ;52a) qui sont en vis-à-vis l'une de l'autre, et dont au moins une (52a) est mobile transversalement à la direction de transport dudit convoyeur (3) entre une position de calage dans laquelle elle immobilise une boîte en position de découpe transversalement à la direction (X) de transport du convoyeur de calage (50) par serrage de la boîte (2) entre les deux butées latérales (53 ; 52a) et une position écartée dans laquelle elle est suffisamment écartée de l'autre butée latérale (53) pour ne pas faire obstacle au passage d'une boîte (2) transportée sur le convoyeur de calage (50).

16. Installation selon l'une quelconque des revendications précédentes, dans laquelle l'unité de commande (32) est apte à piloter automatiquement le déplacement de la tête de découpe par perforation (31 ; 31A) rapport à la boîte (2), de manière à réaliser une ligne de prédécoupe (Lp) discontinue dans au moins une paroi de la boîte, sur au moins une partie du trajet de découpe, et de préférence le long de tout le trajet de découpe, et/ou dans laquelle l'unité de commande (32) est apte à piloter automatiquement le déplacement de la tête de découpe par perforation (31 ; 31A) par rapport à la boîte (2), de manière à réaliser une ligne de découpe (Ld) continue dans au moins une paroi de la boîte, sur au moins une partie du trajet de découpe, et de préférence le long de tout le trajet de découpe.

17. Utilisation de l'installation de l'une quelconque des revendications précédentes ou d'une tête de découpe par perforation (31 ; 31A) comportant un outil de perforation (3112), qui est actionnable par un moteur (3114) de manière à avoir un mouvement de translation va-et-vient répétitif, pour réaliser automatiquement une découpe et/ou une prédécoupe par perforations successives dans au moins une paroi d'une boîte en suivant un trajet de découpe, et plus particulièrement dans au moins une paroi d'une boîte contenant des articles et/ou d'une boîte déformable de type boîte en carton, et de préférence d'une boîte en carton contenant des articles.

18. Utilisation selon la revendication 17 pour réaliser automatiquement une découpe continue et/ou une prédécoupe discontinue par perforations successives dans au moins deux parois sensiblement perpendiculaires d'une boîte (2).

19. Procédé de découpe automatisée et/ou de prédécoupe automatisée d'une boîte (2), et notamment une boîte contenant des articles et/ou d'une boîte en carton, et de préférence d'une boîte en carton contenant des articles, dans lequel on cale en position de découpe ladite boîte (2) par rapport à un dispositif de découpe (3) comportant une tête de découpe par perforation (31 ; 31A), ladite tête de découpe par perforation (31 ; 31A) comportant un outil de perforation (3112), qui est actionnable par un moteur (3114) de manière à avoir un mouvement de translation va-et-vient répétitif, dans lequel on commande le moteur (3114) de la tête de découpe par perforation (31 ; 31A) et on positionne automatiquement la tête de découpe par perforation (31 ; 31A) par rapport à la boîte (2), de manière à entraîner l'outil de perforation en translation avec un mouvement de va-et-vient (A,B) répétitif à travers une paroi de la boîte, et dans lequel on déplace automatiquement ladite tête de découpe (31 ; 31A), par rapport à la boîte, en suivant un trajet de découpe, de manière à réaliser une découpe et/ou une prédécoupe par perforations successives de la paroi de la boîte (2) au moyen de l'outil de perforation (3112), et de préférence dans lequel la tête de découpe comporte une face d'appui (3111a) et l'outil de perforation (3112) est actionnable par ledit moteur (3114) de manière à avoir un mouvement de translation va-et-vient répétitif, qui est orienté transversalement à la face d'appui (3111a), et entre une position sortie dans laquelle au moins une partie de l'outil de perforation (3112) est en saillie par rapport à la face d'appui (3111a) et une position escamotée dans laquelle l'outil de perforation (3112) ne dépasse pas de la face d'appui (3111a), dans lequel on positionne automatiquement la face d'appui (3111a) contre la paroi de la boîte (2) et on déplace automatiquement ladite tête de découpe par perforation (31 ; 31A) par rapport à la boîte, en suivant le trajet de découpe, et en maintenant la face d'appui (3111a) contre la paroi de la boîte, de préférence en exerçant au moyen de la face d'appui (3111a) une pression mécanique sur la paroi de la boîte.

20. Procédé selon la revendication 19, dans lequel on réalise, avant ou pendant l'opération de découpe et/ou prédécoupe de la boîte (2) au moyen de l'outil de perforation (3112), une mesure automatique d'une ou plusieurs dimensions de la boîte (2), de préférence en utilisant des moyens de mesure (6) sans contact, et de préférence dans lequel on réalise automatiquement l'opération de découpe par perforation d'une boîte (2) en suivant un trajet de découpe pendant que l'on mesure la ou les dimensions de la boîte suivante à découper.
